# EUROPÄISCHE PATENTSCHRIFT

(11) **EP 0 885 088 B1**
(45) Veröffentlichungstag und Bekanntmachung des Hinweises auf die Patenterteilung: **28.02.2001**
(21) Anmeldenummer: 97901590.6
(22) Anmeldetag: 23.01.1997
(51) Int. Cl.: B23Q 39/02, B23Q 3/157, B23Q 1/70

(54) **VERFAHREN UND WERKZEUGMASCHINE ZUR BEARBEITUNG VON WERKSTÜCKEN MIT ZWEI ARBEITSSPINDELN**
PROCESS AND MACHINE TOOL FOR MACHINING WORKPIECES WITH TWO WORK SPINDLES
PROCEDE ET MACHINE-OUTIL D'USINAGE DE PIECES A DEUX ARBRES MOTEURS

(30) Priorität: 05.03.1996 DE 19608350; 05.03.1996 DE 29604045 U
(43) Veröffentlichungstag der Anmeldung: 23.12.1998
(73) Patentinhaber: Hüller Hille GmbH, 71636 Ludwigsburg (DE)
(72) Erfinder: GEIGER, Dietrich, D-71723 Grossbottwar (DE)
(74) Vertreter: Dahlkamp, Heinrich-Leopold, Dipl.-Ing.
(86) Internationale Anmeldenummer: EP9700296
(87) Internationale Veröffentlichungsnummer: WO9732689

(56) Entgegenhaltungen:
- CH-A- 685 609
- JP-U- 62 138 515
- US-A- 5 336 025
- US-A- 5 343 604

## Beschreibung

Werkzeugmaschine, insbesondere für numerisch gesteuerte Bearbeitungszentren, zur Bearbeitung von Werkstücken mit parallel zueinander an einem Spindelstock angeordneten Arbeitsspindeln, wobei der Abstand der Arbeitsspindeln senkrecht zu ihrer Drehachse verstellbar ist.

Stand der Technik sind zweispindlige Bearbeitungszentren mit horizontaler Spindellage (z.B. Hüller Hille, nb-h twin) oder vertikaler Spindellage (z.B. Werner DUOMATIK) mit automatischem Werkzeugwechsler aber fester Spindellage. Diese Maschinen unterscheiden sich gegenüber einspindligen Maschinen durch eine weitere Erhöhung der Produktionsleistung bei gleichzeitiger Wahrung der Flexibilität. Auf diesen Maschinen werden üblicherweise zwei Werkstücke parallel bearbeitet, wobei die Werkstücke dem festen Spindelabstand entsprechend auf einer Vorrichtung gespannt sind. Durch den festen Abstand der Spindeln ist das Einsatzfeld dieser Maschinen zwangsläufig begrenzt, die gleichzeitige Bearbeitung mehrerer Positionen an einem Werkstück ist nur in Ausnahmefällen möglich. Die Veränderung des Spindelabstandes an diesen Maschinen verursacht hohe Kosten.

Ein weiterer Nachteil von Maschinen mit festem Spindelabstand ist die immer vorhandene, durch Erwärmung verursachte, Abstandsänderung der Spindeln, die sich auch durch bekannte Ausgleichsmaßnahmen, z.B. Kühlung, nur eingeschränkt beherrschen läßt.

Da die bekannten Doppelspindeln einen gemeinsamen Antrieb besitzen, ist es auch nicht möglich, mit Werkzeugen unterschiedlichen Durchmessers gleichzeitig zu arbeiten. Es ist bei diesem Maschinenaufbau nämlich nicht möglich, die zwangsläufig unterschiedlichen Umfangsgeschwindigkeiten über angepasste Spindeldrehzahlen auszugleichen.

Aus der US PS 5336025 ist eine Werkzeugmaschine der eingangs genannten Art mit zwei getrennt voneinander in vertikaler Richtung bewegbaren Arbeitsspindeln bekannt, wobei jede Spindel an separat angetriebenen, vertikal bewegbaren Einrichtungen befestigt ist. Diese Konstruktion ist sehr kompliziert und aufwendig. Das gilt auch für die Konstruktion nach der JP 62138515 U, bei der zwei übereinander liegende Arbeitsspindeln über getrennte senkrecht angeordnete Spindeln unabhängig voneinander in vertikaler Richtung verfahrbar sind.

Des weiteren ist die Werkzeugversorgung dieser Doppelspindeln mit z.B. zwei Werkzeugmagazinen bei horizontaler Anordnung der Spindeln oder Kettenmagazine mit zwei bis vier Werkzeuggreifern in einem Übergabearm bei vertikaler Anordnung der Doppelspindeln mit erheblichem Kostenaufwand verbunden.

Der Erfindung liegt die Aufgabe zugrunde, eine gattungsgemäße Werkzeugmaschine vorzugschlagen, die geeignet ist für die Parallelbearbeitung von zum Beispiel Bohrungen an ein oder mehreren Werkstücken mit auch unterschiedlichen Durchmessern und die ein einfaches, gleichzeitiges Wechseln der Werkzeuge aller Arbeitsspindeln gestattet.

Die Lösung dieser Aufgabe ist im Anspruch 1 angegeben. Die Unteransprüche 2 bis 6 enthalten sinnvolle Ausführungsformen dazu.

Erfindungsgemäß wird vorgeschlagen, daß eine Arbeitsspindel fest im Gehäuse des Spindelstockes angeordnet ist und mindestens eine zweite Arbeitsspindel in einem Schlitten befestigt ist, der U-förmig die feststehende Arbeitsspindel umfasst und an den offenen Schenkeln Führungsleisten besitzt, die in fest mit dem Gehäuse des Spindelstockes verbundenen Führungselementen verschieblich gelagert sind.

Diese Verstellung des Abstandes der Arbeitsspindeln kann sowohl kontinuierlich als auch diskontinuierlich vor jedem einzelnen Bearbeitungsvorgang vorgenommen werden. Dabei kann auch automatisch nach Festellung bestimmter Maßabweichungen eine Korrektur des Achsabstandes vorgenommen werden, ohne daß ein Bedienungsmann von außen eingreifen muß.

Zur Bearbeitung von Werkstücken mit insbesondere zwei oder auch zwei Gruppen von parallel zueinander an einem Spindelstock angeordneten Arbeitsspindeln ist mindestens eine Arbeitsspindel senkrecht zu ihrer Drehachse verstellbar angeordnet. Es können aber auch beide Spindeln oder auch beide Gruppen von Spindeln in dem Gehäuse des Spindelstockes verstellbar angeordnet sein.

Die verstellbaren Spindeln sind in Verstellrichtung mit senkrecht oder waagerecht angeordneten Führungsleisten verbunden und gegenüber dem Gehäuse in fest am Gehäuse befestigten Führungselementen verstellbar gelagert. Die verstellbare Spindel ist in einen U-förmigen Schlitten gelagert, wobei an den freien Schenkeln die Führungsleisten angeordnet sind und in entsprechenden Führungselementen gleitend gelagert sind. Außen an dem U-förmigen Schlitten und/oder der Führungsleiste kann ein- oder beidseitig eine Konsole befestigt sein, die wiederum mit einer parallel zum Schlitten oder den Führungsleisten verlaufenden Verstelleinrichtung verbunden ist.

Durch die erfindungsgemäße Verstellbarkeit des Abstandes der beiden Spindeln beziehungsweise Spindelgruppen ist eine sehr weitgehende Anpassung des Bearbeitungszentrums an verschiedene Werkstücke möglich, ohne daß es irgendwelcher größerer Umbauarbeiten bedarf. Auch schon bei größeren Maßungenauigkeiten einer Serie von sonst an sich gleichen Werkstücken kann mit der erfindungsgemäßen Einrichtung die Bearbeitungsmaschine entsprechend angepaßt werden.

Die Werkzeugmaschine kann außerdem, wie in den Ansprüchen 3 bis 6 näher beschrieben, mit einer speziellen Magazinscheibe versehen werden, bei der die Werkzeuge des Spindelstockes gleichzeitig in entsprechenden Werkzeughaltern der Magazinscheibe abgelegt bzw. aus dieser übernommen werden können.

Ein in der Magazinscheibe angeordneter sektorartiger Ausschnitt kann dabei etwa der Außenkontur des Arbeitsraumes entsprechen und die volle Nutzung des Arbeitsraumes der Maschine gestatten, ohne daß sie zusätzlich in x- oder y-Richtung verfahren werden muß.

Zweckmäßigerweise ist an dem sektorförmigen Ausschnitt der Magazinscheibe eine entsprechend geformte Verschlußklappe befestigt, die in der Bearbeitungsstellung gemeinsam mit der übrigen Magazinverkleidung eine geschlossene Kammer bildet. Beim Drehen der Magazinscheibe in die Werkzeugwechselposition wird die Verschlußklappe in die Kammer hinein- oder herausgedreht und diese dadurch geöffnet oder geschlossen.

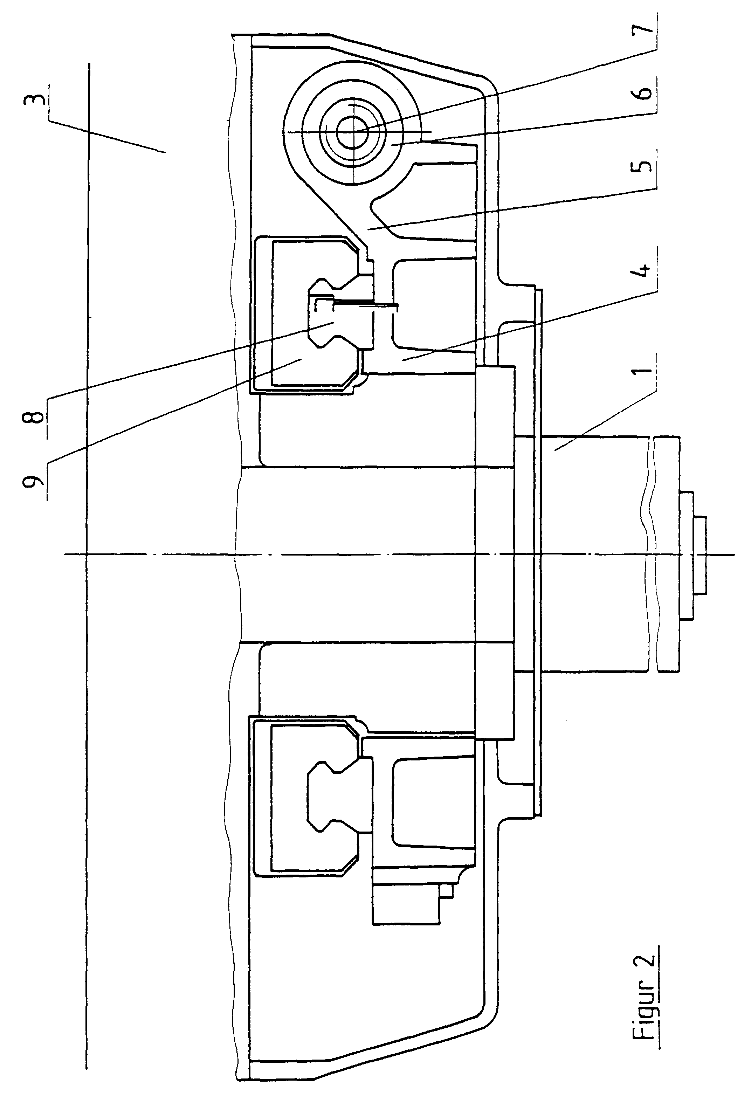

Die Erfindung wird anhand der beigefügten Figuren 1 bis 3 beispielsweise näher erläutert. Es zeigen
- Fig. 1: in der Seitenansicht die Anordnung zweier Arbeitsspindeln in einem Spindelstock
- Fig. 2: einen waagerechten Schnitt zu Fig. 1
- Fig. 3: in der Seitenansicht die erfindungsgemäße Magazinscheibe.

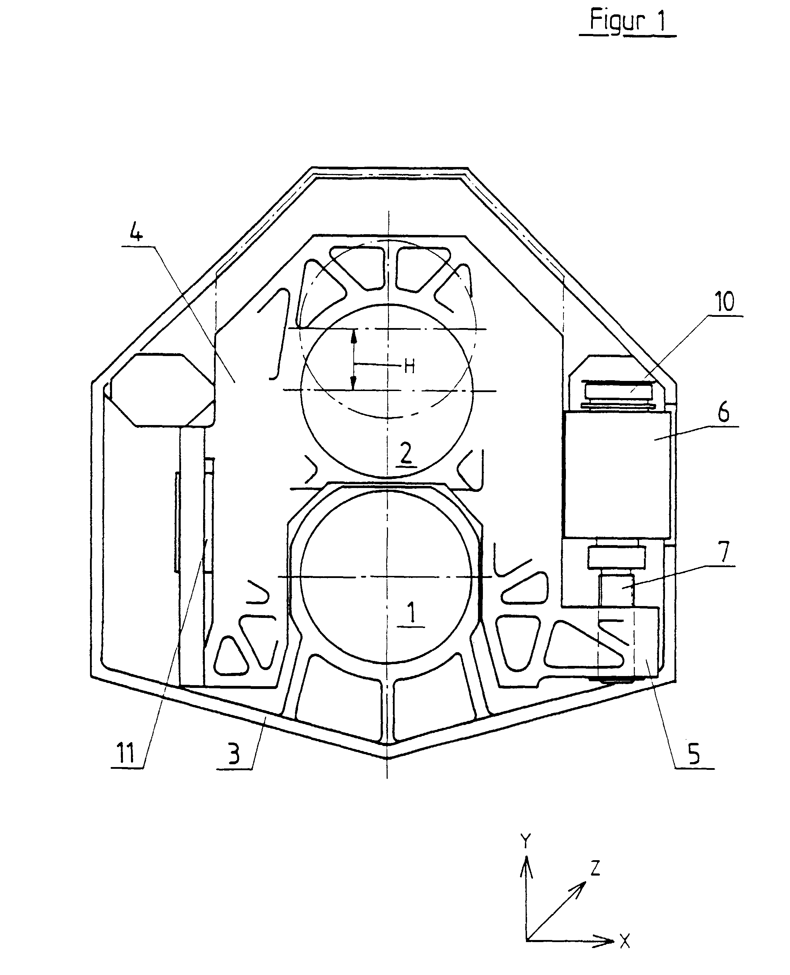

Nach Fig. 1 ist der Spindelstock 3 mit den beiden Arbeitsspindeln 1,2 in üblicher Weise insgesamt in x- und y-Richtung verfahrbar, während die beiden als Motorspindeln ausgebildeten Arbeitsspindeln 1,2 zur Bearbeitung in z-Richtung bewegt werden. Die Arbeitsspindel 1 ist im Gehäuse des Spindelstockes 3 radial fest gelagert und die Antriebsspindel 2 ist in einem U-förmigen Schlitten 4 gelagert und kann gemeinsam mit dem Schlitten 4 um den Hub H verstellt werden. Dazu besitzt der Schlitten 4 an seinen beiden freien Enden Führungsleisten 8, die im Führungselement 9 des Gehäuses des Spindelstockes 3 bewegt werden. An dem einen Arm des Schlittens 4 ist außen eine Konsole 5 angebracht, die über eine Verstelleinrichtung 6 mit dem Gehäuse 3 verbunden ist. Zur Verstelleinrichtung 6 gehört ein Riemenantrieb 10, ein Getriebe und eine Kugelrollspindel 7. Auf der der Konsole 5 abgewandten Seite des Schlittens 4 ist außerdem ein Maßstab 11 zur Überwachung des Verstellweges der Arbeitsspindel 2 gegenüber der Arbeitsspindel 1 angebracht.

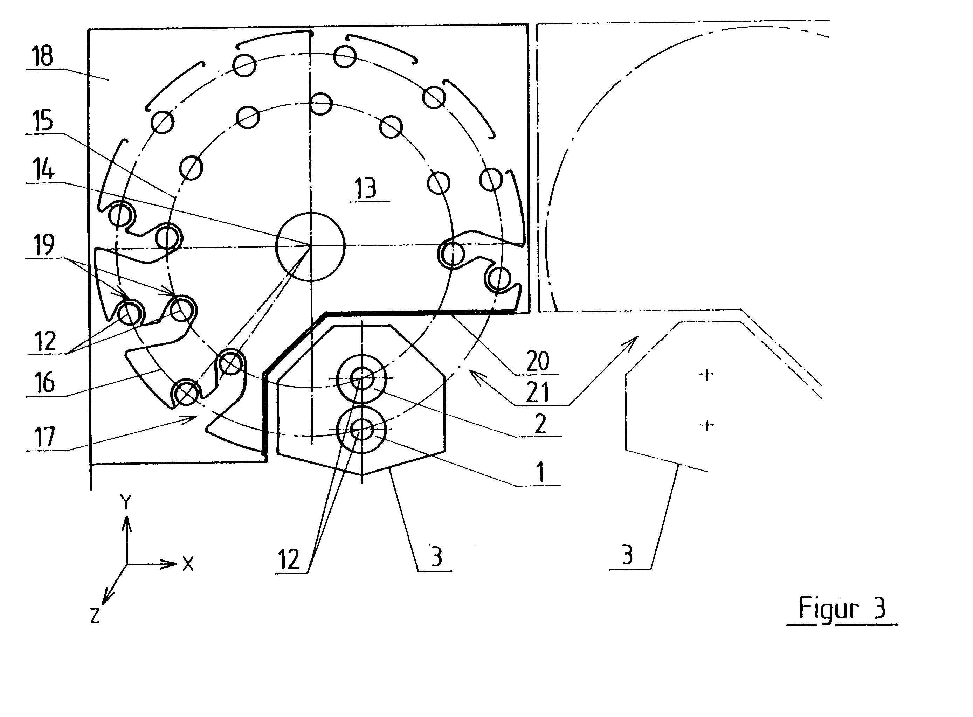

In Fig. 3 sind für ein Bearbeitungszentrum zwei Magazinscheiben 13 dargestellt, wobei vom Prinzip her eine Magazinscheibe ausreicht. Es ist daher die eine Hälfte der Fig. 3 nur gestrichelt dargestellt, um anzudeuten, daß die Magazinscheibe 13 auch entweder nur auf der linken oder nur auf der rechten Seite angeordnet sein kann. Der Spindelstock 3 kann in x-und y-Richtung verfahren werden. Der Werkzeugwechsel erfolgt in der dargestellten Position des Spindelstockes 3 (oben links bzw. oben rechts in der Fig. 3). Die Magazinscheibe 13 wird dazu zunächst um ihre zentrale Drehachse 14 gedreht, wobei die an der Magazinscheibe 13 befestigte Verschlußklappe 20 innerhalb der Magazinverkleidung 18 in die Kammer gedreht wird bis eine taschenartige Aussparung 17 und die zugehörigen Werkzeughalter 19 zur Aufnahme oder Abgabe der Werkzeuge 12 von oder an den Spindelstock 3 bereit sind. Die beiden Werkzeughalter 12 an der Magazinscheibe 13 zur Aufnahme der beiden Werkzeuge 12 sind jeweils auf konzentrisch angeordneten Teilkreisen 15 und 16 innerhalb von im Umfangsbereich der Magazinscheibe 13 angeordneten taschenförmigen Aussparungen 17 angeordnet. Die Werkzeughalter 19 auf den inneren und äußeren Teilkreisen 15 oder 16 sind um die Drehachse 14 gegeneinander um einen bestimmten Winkel so gegeneinander verdreht angeordnet, daß der Abstand zweier Werkzeughalter 19 dem Abstand der beiden Arbeitsspindeln 1,2 entspricht.

### Bezugszeichenliste:

- 1: Arbeitsspindel, Motorspindel (radial fest)
- 2: Arbeitsspindel, Motorspindel (radial verstellbar)
- 3: Spindelstock
- 4: Schlitten (U-förmig; verstellbar gegenüber 1 bzw. 3)
- 5: Konsole an 4
- 6: Verstelleinrichtung (Getriebe)
- 7: Verstellspindel (Kugelrollspindel)
- 8: Führungsleiste (verstellbar)
- 9: Führungselemente (fest an 3)
- 10: Riemenantrieb
- 11: Maßstab zur Messung des Verstellweges
- 12: Werkzeug
- 13: Magazinscheibe
- 14: Drehachse von 13
- 15,16: konzentrisch angeordnete Teilkreise
- 17: Taschen, Aussparungen
- 18: Magazinverkleidung
- 19: Werkzeughalter an 13
- 20: Verschlußklappe
- 21: sektorartiger Ausschnitt
- H: Hub, Verstellweg von 2, 4, 5

## Patentansprüche

1. Werkzeugmaschine, insbesondere für numerisch gesteuerte Bearbeitungszentren, zur Bearbeitung von Werkstücken mit parallel zueinander an einem Spindelstock angeordneten Arbeitsspindeln, wobei der Abstand der Arbeitsspindeln senkrecht zu ihrer Drehachse verstellbar ist, **dadurch gekennzeichne**t, dass eine Arbeitsspindel (1) fest im Gehäuse des Spindelstockes (3) angeordnet ist und mindestens eine zweite Arbeitsspindel (2) in einem Schlitten (4) befestigt ist, der U-förmig die feststehende Arbeitsspindel umfasst und an den offenen Schenkeln Führungsleisten (8) besitzt, die in fest mit dem Gehäuse des Spindelstockes (3) verbundenen Führungselementen (9) verschieblich gelagert sind.

2. Werkzeugmaschine nach Anspruch 1, **dadurch gekennzeichnet**, dass an den Führungsleisten (8) und/oder dem Schlitten (4) seitlich mindestens eine Konsole (5) befestigt ist, die mit einer Verstelleinrichtung (6) verbunden ist.

3. Werkzeugmaschine nach Anspruch 1 oder 2, **dadurch gekennzeichnet**, dass dem Spindelstock (3) mit den beiden parallel zueinander angeordneten Arbeitsspindeln (1, 2) eine Magazinscheibe (13) mit einer zentralen zur Spindelachse parallelen Drehachse (14) zugeordnet ist, wobei in taschenförmigen Ausnehmungen (17) jeweils zwei Werkzeughalter (19) angeordnet sind, die auf zwei konzentrisch gelagerten Teilkreisen (15, 16) innerhalb des Außendurchmessers der Magazinscheibe (13) angeordnet sind und deren Winkelteilung so gegeneinander verschoben ist, dass der Abstand zweier zusammengehöriger Werkzeughalter (19) dem Abstand der beiden Arbeitsspindeln (1, 2) entspricht.

4. Werkzeugmaschine nach Anspruch 3, **dadurch gekennzeichnet**, dass die Magazinscheibe (13) einen sektorartigen Ausschnitt (21) besitzt.

5. Werkzeugmaschine nach Anspruch 4, **dadurch gekennzeichnet**, dass an dem sektorartigen Ausschnitt (21) eine entsprechend geformte Verschlußklappe (20) befestigt ist.

6. Werkzeugmaschine nach Anspruch 5, **dadurch gekennzeichnet**, dass die Verschlußklappe (20) für die Werkzeugwechselposition in die Kammer, in der die Magazinscheibe (13) drehbar angeordnet ist, bewegbar ist.

## Claims

1. Machine tool, especially for numerically controlled machining centers for machining workpieces with work spindles arranged in parallel to one another at a headstock, wherein the distance between the work spindles is adjustable at right angles to their axes of rotation, **characterized in that** a work spindle (1) is mounted rigidly in the housing of the headstock (3) and at least one second work spindle (2) is fastened in a carriage (4) which surrounds the stationary work spindle in a U-shaped pattern and has guide beads (8) at the open legs being mounted displaceable in guide elements (9) rigidly connected to the housing of the headstock (3).

2. Machine tool according to claim 1, **characterized in that** at least one bracket (5) connected to an adjusting device (6) is fastened on a side of the guide beads (8) and/or carriage (4).

3. Machine tool according to claim 1 or 2, **characterized in that** a magazine disk (13) associated with this headstock (3) with the two work spindles (1, 2) arranged in parallel to each other has a central axis of rotation (14) parallel to the axis of the spindle, wherein two tool holders (19) are arranged in pocket-like openings (17) being arranged on two concentrically mounted pitch circles (15, 16) inwardly of an external diameter of the magazine disk (13) and wherein said two tool holders have an angle pitch which is shifted in relation to one another in such a manner that the distance between the two tool holders (19) belonging together corresponds to the distance between said two work spindles (1, 2).

4. Machine tool according to claim 3, **characterized in that** a sector-shaped cutout (21) is arranged in the magazine disk (13).

5. Machine tool according to claim 4, **characterized in that** a correspondingly shaped closing flap (20) is fastened to the sector-shaped cutout (21).

6. Machine tool according to claim 5, **characterized in that** the closing flap (20) can be moved for a tool change position into a chamber in which the magazine disk (13) is arranged rotatably.

## Revendications

1. Machine-outil, en particulier pour les centres d'usinage à commande numérique, pour l'usinage de pièces avec arbres de travail montés parallèlement l'un par rapport à l'autre sur une poupée fixe, la distance entre les arbres de travail étant ajustable perpendiculairement à leur axe de rotation **caractérisée en ce qu'**un arbre de travail (1) est monté de manière rigide dans le corps de la poupée fixe (3) et qu'au moins un deuxième arbre de travail (2) est fixé dans un chariot (4) qui entoure l'arbre de travail rigide en forme de U et qui possède sur ses côtés ouverts des glissières de guidage (8) logées de manière ajustable dans des éléments de guidage (9) reliés rigidement au corps de la poupée fixe (3).

2. Machine-outil selon la revendication1 **caractérisée en ce qu'**une console (5) au moins est fixée latéralement sur les glissières de guidage (8) et/ou sur le chariot, ladite console étant reliée à un dispositif d'ajustage (6).

3. Machine-outil selon la revendication 1 ou 2, **caractérisée en ce qu**'un disque de magasin (13) avec un axe de rotation central 14 parallèle à l'axe de l'arbre est affecté à la poupée fixe (3) avec les deux arbres de travail (1,2) montés parallèlement l'un à l'autre, deux porte-outils (19) étant montés dans des dégagements en forme de poche (17), lesdits porte-outils étant montés sur deux cercles gradués (15, 16) situés contrentiquement dans les limites du diamètre extérieur du disque de magasin (13) et ayant des pas angulaires décalés l'un par rapport à l'autre de manière telle que la distance entre deux porte-outils (19) correspondants correspond à la distance entre les deux arbres de travail (1, 2).

4. Machine-outil selon la revendication 3, **caractérisée en ce que** le disque de magasin (13) possède une découpe (21) en forme de secteurs.

5. Machine-outil selon la revendication 4, **caractérisée en ce qu**'un clapet de fermeture (21) de forme correspondante est fixé à l'une des découpes (21) en forme de secteurs.

6. Machine-outil selon la revendication 5, **caractérisée en ce que** le clapet de fermeture (20) peut être déplacé dans une chambre pour la position de changement de l'outil, le disque de magasin (13) étant monté dans cette chambre de manière pivotante.
